# DEMANDE DE BREVET EUROPEEN

(11) **EP 1 790 553 A1**
(43) Date de publication de la demande: **30.05.2007**
(21) Numéro de dépôt: 06300967.4
(22) Date de dépôt: 21.09.2006
(51) Int. Cl.: B62D 25/02, B62D 25/06

(54) **Elément de structure de véhicule autombile**

(30) Priorité: 28.11.2005 FR 0553618
(71) Demandeur: Renault s.a.s., 92100 Boulogne Billancourt (FR)
(72) Inventeur: Chataigner, Aurélien, 92360, MEUDON LA FORET (FR)

(57) **Abrégé**

L'invention concerne un élément de structure (1) formant support pour des pièces de carrosserie d'un véhicule automobile (2), l'élément de structure (1) s'entendant longitudinalement entre une zone avant (3) et une zone arrière (4) du véhicule (2) et formant séparation entre d'une part une portière avant (5) et un pare-brise (6) et d'autre part au moins la portière avant (5) et un pavillon (7, 17).

Selon l'invention l'élément de structure (1) se présente sous la forme d'une unique pièce tubulaire hydroformée.

## Description

### DOMAINE TECHNIQUE

L'invention se rapporte au domaine des véhicules automobiles, et plus particulièrement à leur structure porteuse pour recevoir des éléments de carrosserie. Cette structure porteuse est apte à se déformer pour amortir l'impact en cas d'accident mais elle permet également d'éviter l'affaissement du pavillon en cas de retournement.

Ainsi, l'invention vise plus particulièrement un élément de structure situé à la jonction entre, d'une part, un pare-brise et une portière avant et, d'autre part, le pavillon avec les portières du véhicule. Un tel élément de structure est couramment désigné par le terme de "montant de baie" au niveau du pare-brise, puis de "brancard" au niveau du pavillon.

### ETAT ANTERIEUR DE LA TECHNIQUE

De façon générale, les éléments de structure de véhicule automobile formant montant de baie et brancard sont réalisés par assemblage d'au moins deux tôles formées à la presse puis solidarisées l'une avec l'autre par soudure. Un tel assemblage présente de nombreux inconvénients, et notamment chaque pièce de l'assemblage doit présenter des bandes destinées à être mises en regard pour permettre la soudure des deux pièces. Ces deux bandes ont pour inconvénient majeur d'alourdir la structure du véhicule et de générer des arêtes vives pouvant se révéler dangereuses en cas de choc.

De plus, un tel assemblage nécessite des opérations de soudure préalables à la pose des éléments de carrosserie du véhicule, ce qui engendre une durée de fabrication plus longue et par conséquent des coûts supplémentaires.

Le but de l'invention est donc d'améliorer la sécurité d'un véhicule tout en réduisant son poids, la durée nécessaire à sa fabrication et son coût.

### EXPOSE DE L'INVENTION

L'invention concerne un élément de structure formant support pour des pièces de carrosserie d'un véhicule automobile. L'élément de structure s'étend longitudinalement entre une zone avant et une zone arrière du véhicule. Il forme une zone de séparation entre d'une part, une portière avant et le pare-brise et, d'autre part, au moins cette partie avant et un pavillon.

Il se caractérise en ce qu'il se présente sous la forme d'une unique pièce tubulaire hydroformée.

Autrement dit, l'élément de structure est réalisé sans assemblage et est obtenu en déformant un tube au moyen d'un fluide sous pression. Pour ce faire, le tube est positionné à l'intérieur d'une matrice ou entre une pluralité de rouleaux aptes à empêcher la déformation de la paroi du tube lorsque le fluide sous pression exerce une force de l'intérieur.

Lorsque la forme de la section de la pièce monolithique tubulaire désirée est obtenue, cette pièce est alors découpée en tronçons tubulaires de manière à former l'élément de structure. Chaque véhicule présente ainsi deux éléments de structure agencés symétriquement par rapport au plan médian de symétrie longitudinal du véhicule.

Selon un mode de réalisation particulier, l'élément de structure peut comporter une section transversale de forme constante sur toute sa longueur.

Dans ce cas, la forme de la section transversale peut être obtenue par divers procédés de fabrication utilisant des outils de forme relativement simple. L'élément de structure présente alors les mêmes caractéristiques de résistance mécanique et de déformation sur toute sa longueur.

Selon un second mode de réalisation, l'élément de structure peut comporter une section transversale de forme variable. Ainsi, en fonction de la zone du véhicule qu'il doit renforcer, l'élément de structure peut comporter une variation de la forme de la section, celle-ci conservant une épaisseur constante. Elle peut également présenter une variation d'épaisseur localisée, la forme globale de la section restant inchangée. Un tel mode de réalisation est bien entendu plus complexe à réaliser mais peut être avantageux afin de limiter le poids de l'élément de structure ou de mieux maîtriser ses déformations en cas de choc.

Avantageusement, l'élément de structure peut servir de support à un élément de carrosserie agencé à l'extérieur du véhicule entre, d'une part, la portière avant et le pare-brise et, d'autre part, au moins la portière avant et un pavillon.

En d'autres termes, un élément de carrosserie apparent de l'extérieur du véhicule est solidarisé avec l'élément de structure de façon à permettre le rappel de la teinte du véhicule entre les portières et le pavillon ou le pare-brise.

En pratique, l'élément de carrosserie peut être solidarisé avec l'élément de structure par un procédé de soudure laser au niveau d'une première et d'une deuxième zones de l'élément de carrosserie.

En effet, pour solidariser l'élément de carrosserie avec l'élément de structure, deux portions sensiblement planes de l'élément de carrosserie sont mises en regard de l'élément de structure et sont soudées par points au moyen d'un laser. Ces deux bandes planes sont agencées sensiblement à proximité des lisières de la tôle formant l'élément de carrosserie.

Le pavillon, qui peut être une tôle métallique, peut être solidarisé avec l'élément de carrosserie de diverses manières

Ainsi, selon une première variante, le pavillon peut être solidarisé avec l'élément de carrosserie par un procédé de soudo-brasage au niveau d'une troisième zone de l'élément de carrosserie.

Autrement dit, un cordon de soudure permet de solidariser le pavillon avec l'élément de carrosserie. Dans cette variante, l'élément de carrosserie, et le pavillon sont agencés de manière à rendre affleurantes les deux surfaces qu'elles définissent. La soudure entre l'élément de carrosserie et l'élément de structure réalisée au niveau de la première zone de l'élément de carrosserie est alors invisible.

Selon une deuxième variante, le pavillon peut être solidarisé avec l'élément de carrosserie par un procédé de soudure laser au niveau de la première zone de l'élément de carrosserie.

Dans ce cas, la solidarisation entre d'une part l'élément de carrosserie et l'élément de structure et d'autre part, le pavillon et l'élément de carrosserie, peut être réalisée en une seule étape. En effet, l'élément de carrosserie et le pavillon peuvent présenter des portions planes se chevauchant sur l'élément de structure, la soudure étant réalisée au travers du pavillon, de l'élément de carrosserie et de l'élément de structure. De cette manière, la soudure à laser est alors visible de l'extérieur, mais une pièce annexe peut venir recouvrir cette zone de raccord.

Avantageusement, le pare-brise peut être solidarisé par collage avec l'élément de carrosserie au niveau de la première zone de l'élément de carrosserie.

En d'autres termes, au niveau de l'élément de structure formant montant de baie, la première zone de l'élément de carrosserie peut être recouverte par un joint de colle masquant alors toute la bande de soudure entre l'élément de carrosserie et l'élément de structure. Dans ce cas, la surface extérieure du pare-brise vient affleurer avec la surface définie par l'élément de carrosserie.

Selon un mode de réalisation particulier, un joint de portière peut comporter une gorge dans laquelle est insérée une arête vive de l'élément de carrosserie au niveau de ladite deuxième zone de l'élément de carrosserie. De cette manière, le joint de portière peut être solidarisé avec l'élément de carrosserie sans nécessiter de collage et par simple coincement de l'arête vive par la gorge déformable du joint de portière.

### DESCRIPTION SOMMAIRE DES FIGURES

La manière de réaliser l'invention ainsi que les avantages qui en découlent, ressortiront bien de la description du mode de réalisation qui suit, donné à titre indicatif et non limitatif, dans laquelle :
La figure 1 est une vue de profil d'un véhicule automobile comportant l'élément de structure, conforme à l'invention.
Les figures 2 à 5 représentent diverses variantes de solidarisation d'une part, de l'élément de carrosserie avec l'élément de structure, et d'autre part, du pavillon avec l'élément de carrosserie, conformément à l'invention.

### MANIERE DE REALISER L'INVENTION

Comme déjà évoqué, l'invention concerne un élément de structure formant support pour des pièces de carrosserie d'un véhicule automobile.

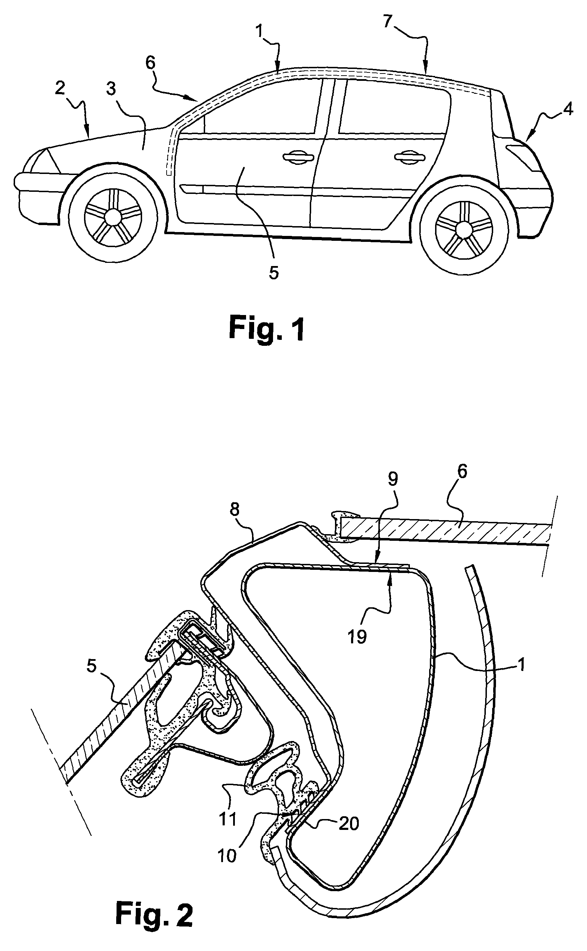

Tel que représenté à la figure 1, l'élément de structure (1) s'étend longitudinalement entre une zone avant (3) et une zone arrière (4) d'un véhicule automobile (2). Dans la variante représentée, l'élément de structure (1) au niveau de la zone avant (3) est soudé sur un anneau avant à la base d'un pare-brise (6). Dans d'autres variantes, l'élément de structure (1) peut se prolonger vers le bas et débuter à proximité de la base d'une portière avant (5).

Cet élément de structure (1) forme séparation entre d'une part, la portière avant (5) et le pare-brise (6), et d'autre part, au moins cette portière avant (5) et un pavillon (7). Dans la variante représentée, le véhicule (2) comporte également des portières arrières et par conséquent l'élément de structure (1) forme également séparation entre les portières arrières et le pavillon (7).

Tel que représenté à la figure 2, l'élément de structure (1) comporte une forme tubulaire hydroformée réalisée à partir d'une seule pièce dont la forme de la section transversale peut être identique sur toute sa longueur. Cependant, dans certains cas particuliers, la forme de la section transversale de l'élément de structure (1) peut varier pour générer localement des zones de renfort aptes à résister à des sollicitations élevées. Les variations de la forme de la section transversale de l'élément de structure (1) peuvent également permettre de générer des zones d'absorption de l'énergie cinétique du véhicule en cas de choc. Ces zones de formes différentes peuvent ainsi se déformer de façon à absorber de manière optimale un choc en cas d'accident notamment.

Par ailleurs, un élément de carrosserie (8) est rapporté par un procédé de soudure laser sur l'élément de structure (1). Les zones de soudure sont réalisées au niveau d'une première (9) et deuxième (10) zones de l'élément de carrosserie (8). Ces première et deuxième zones (9, 10) de l'élément de carrosserie (8) sont sensiblement planes et positionnées à proximité des deux lisières de l'élément de carrosserie (8).

Ainsi, l'élément de structure (1) comporte des surfaces planes (19, 20) aptes à accueillir les première (9) et deuxième (10) zones de l'élément de carrosserie (8). L'utilisation d'une pièce unique pour former l'élément de structure (1) permet d'ajuster la dimension et le positionnement de ces surfaces planes d'accueil sur toute la longueur de l'élément de structure (1), en éliminant par la même occasion les feuillures.

La figure 2 représente une vue en coupe réalisée au niveau de la baie de pare-brise (6). Au niveau de la première zone (9) de l'élément de carrosserie (8), le pare-brise (6) est solidarisé par un joint de colle.

Dans la variante représentée, le joint de portière (11) est collé au niveau de la deuxième zone (10) de l'élément de carrosserie (8).

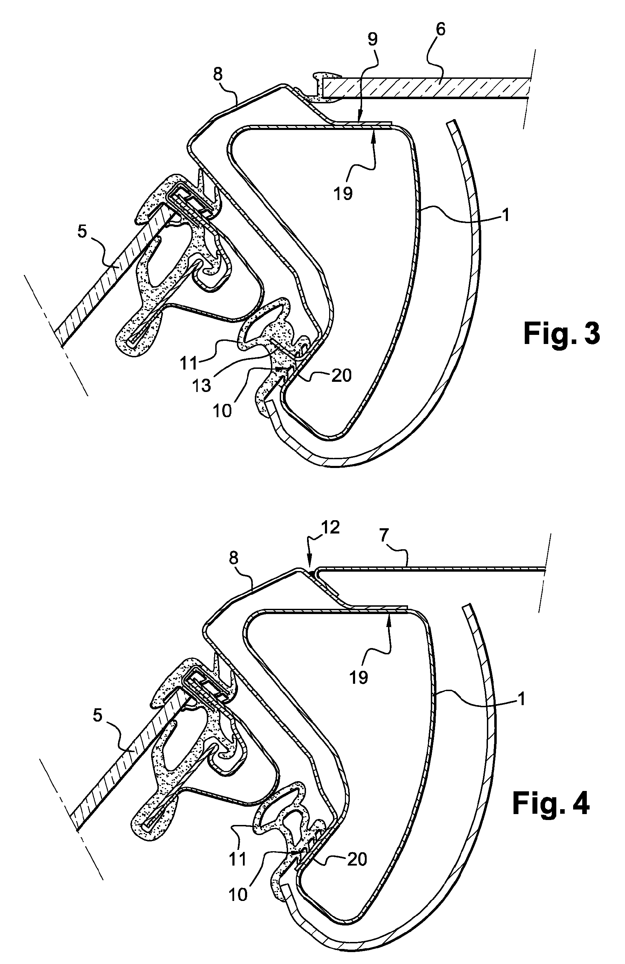

Tel que représenté à la figure 3, le joint de portière (11) peut également être rapporté au niveau de la deuxième zone (10) de l'élément de carrosserie (8) sur une arête vive localisée à sa lisière. Pour ce faire, le joint de portière (11) comporte une gorge (13) apte à réaliser le coincement par déformation élastique du joint de portière (11) sur l'élément de carrosserie (8). Par conséquent, il n'est pas nécessaire d'utiliser un procédé de collage pour solidariser le joint de portière (11) avec l'élément de carrosserie (8).

Tel que représenté à la figure 4, la vue en coupe de l'élément de structure (1) est effectué au niveau du brancard. Autrement dit, dans ce cas l'élément de structure (1) forme la séparation entre la portière avant (5) et le pavillon (7). Comme précédemment, l'élément de carrosserie (8) est solidarisé par un procédé de soudure laser dans une première et deuxième zone (9, 10). La variante ici représentée décrit la solidarisation du pavillon (7) avec l'élément de carrosserie (8) par un procédé de brasage au niveau d'une troisième zone (12) de l'élément de carrosserie (8). De cette manière, l'élément de carrosserie (8) et le pavillon (7) forment alors deux surfaces jointives grâce au raccord réalisé par un cordon de soudure.

Dans ce cas, la soudure au niveau de la première zone (9) de l'élément de carrosserie (8) est alors située en dessous du pavillon (7), et par conséquent invisible de l'extérieur.

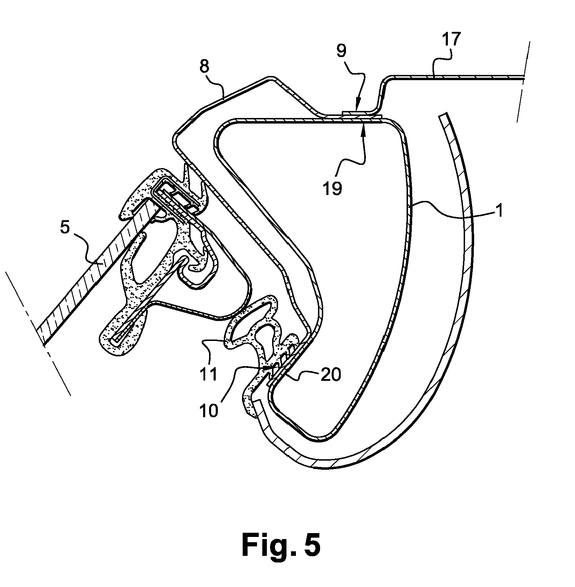

Tel que représenté à la figure 5, un pavillon (17) peut être également solidarisé avec l'élément de carrosserie (8) au niveau de la première zone (9) de l'élément de carrosserie. Dans ce cas, les trois éléments que sont l'élément de carrosserie (8) le pavillon (17) et l'élément de structure (1) sont solidarisés ensemble en une seule opération de soudure laser.

Pour ce faire, on superpose sur l'élément de structure (8), la première zone (9) formant une bande plane de l'élément de carrosserie, puis la lisière du pavillon (17).

Il ressort de ce qui précède qu'un élément de structure de véhicule automobile conforme à l'invention présente de multiples avantages :
■ il ne nécessite aucun assemblage entre deux pièces et est par conséquent plus rapide à réaliser;
■ il présente un faible poids;
■ il permet de réaliser des économies de temps et donc d'argent dans le process de sa fabrication;
■ il permet de rapporter un joint de portière sans collage.

## Revendications

1. Elément de structure (1) formant support pour des pièces de carrosserie d'un véhicule automobile (2), ledit élément de structure (1) s'étendant longitudinalement entre une zone avant (3) et une zone arrière (4) du véhicule (2) et formant séparation entre d'une part une portière avant (5) et un pare-brise (6) et d'autre part au moins ladite portière avant (5) et un pavillon (7, 17), ledit élément de structure (1) se présentant sous la forme d'une unique pièce tubulaire hydroformée et **caractérisé en ce qu'**il comporte une section transversale de forme constante.

2. Ensemble comportant l'élément de structure (1) selon la revendication 1 et un élément de carrosserie (8) agencé à l'extérieur du véhicule (2) entre d'une part ladite portière avant (5) et le pare-brise (6) et d'autre part au moins ladite portière avant (5) et un pavillon (7, 17), **caractérisé en ce que** l'élément de structure (1) sert de support à l'élément de carrosserie (8).

3. Ensemble selon la revendication 2, **caractérisé en ce que** l'élément de carrosserie (8) est solidarisé avec l'élément de structure (1) par un procédé de soudure laser au niveau d'une première (9) et d'une deuxième (10) zones de l'élément de carrosserie (8).

4. Ensemble selon la revendication 3, **caractérisé en ce que** le pavillon (7) est solidarisé avec l'élément de carrosserie (8) par un procédé de soudo-brasage au niveau d'une troisième zone (12) de l'élément de carrosserie (8).

5. Ensemble selon la revendication 3, **caractérisé en ce que** le pavillon (7) est solidarisé avec l'élément de carrosserie (8) par un procédé de soudure laser au niveau de ladite première zone (9) de l'élément de carrosserie (8).

6. Ensemble selon la revendication 3, **caractérisé en ce que** le pare brise (6) est solidarisé par collage avec l'élément de carrosserie (8) au niveau de ladite première zone (9) de l'élément de carrosserie (8).

7. Ensemble selon la revendication 2, **caractérisé en ce qu'**un joint de portière (21) comporte une gorge (13) dans laquelle est insérée une arête vive de l'élément de carrosserie (8) au niveau de ladite deuxième zone de l'élément de carrosserie.
